# EUROPÄISCHE PATENTSCHRIFT

(11) **EP 0 952 041 B1**
(45) Veröffentlichungstag und Bekanntmachung des Hinweises auf die Patenterteilung: **05.11.2003**
(21) Anmeldenummer: 99107299.2
(22) Anmeldetag: 14.04.1999
(51) Int. Cl.: B60R 21/08, B60R 21/06

(54) **Kraftfahrzeug mit mindestens einem zwischen Fahrgastraum und Laderaum anbringbarem Rollo**
Motor vehicle with at least a roll screen attachable between passenger and luggage compartments
Véhicule automobile avec au moins un filet de retenue à rouleau attachable entre les compartiments passagers et bagages

(30) Priorität: 25.04.1998 DE 19818583
(43) Veröffentlichungstag der Anmeldung: 27.10.1999
(73) Patentinhaber: Bayerische Motoren Werke Aktiengesellschaft, 80788 München (DE)
(72) Erfinder: Wolfmüller, Hans, 85435 Erding (DE)

(56) Entgegenhaltungen:
- EP-A- 0 838 375
- DE-A- 4 010 209
- DE-A- 19 527 068
- DE-A- 19 728 547
- US-A- 5 702 143
- PATENT ABSTRACTS OF JAPAN vol. 017, no. 346 (M-1437), 30. Juni 1993 (1993-06-30) -& JP 05 044381 A (NHK SPRING CO LTD), 23. Februar 1993 (1993-02-23)

## Beschreibung

Die Erfindung bezieht sich auf ein Kraftfahrzeug mit mindestens einem zwischen Fahrgastraum und Laderaum anbringbaren Rollo der im Oberbegriff des Patenanspruchs 1 genannten und aus der DE 197 28 547 A1 hervorgehenden Art.

In dieser Druckschrift ist eine sich zwischen dem Fahrgastraum und dem Laderaum eines Kombifahrzeugs befindende Rolloanordnung offenbart, deren Rollogehäuse eine über seine ganze Längserstreckung verlaufende sowie zur Lehnenseite hin offene C-förmige Tragschiene aufweist. An einer ersten, breiten Rückenlehne zweier Rücksitze sind zwei, in Fahrzeugquerrichtung verlaufende Halteteile angebracht, während an einer zweiten schmalen Rückenlehne eines Rücksitzes ein mit den Halteteilen fluchtend verlaufendes Verhakungselement vorgesehen ist; dieses ist in seiner Breite etwas geringer bemessen als die Maulweite der C-förmigen Tragschiene. Bei nach vorne geschwenkten Rückenlehnen wird bei starken Fahrzeugverzögerungen die Tragschiene durch ein im Laderaum vorhandenes, schweres Ladegut auf Biegung belastet, wodurch eine formschlüssige Verhakung zwischen dem C-förmigen Bereich der Tragschiene und dem Verhakungselement der schmalen Rückenlehne erfolgt. Die C-förmige Tragschiene und das Verhakungselement müssen jedoch zur Erzielung der formschlüssigen Verhakung passgenau hergestellt und lagegenau zueinander angeordnet werden, was arbeitsaufwändig und damit teuer ist.

Ferner geht aus der DE 195 27 068 A1 eine Laderaumsicherung für ein Kombifahrzeug hervor, deren Gehäuse aus einem einstückigen, in Fahrzeugquerrichtung verlaufenden Hohlprofil besteht. Dieses hat zwei Aufnahmeräume für jeweils ein Rollo, wobei im ersten Aufnahmeraum eine Rollowelle für ein horizontal ausziehbares Laderaumrollo vorgesehen ist, während sich im zweiten Aufnahmeraum ein lotrecht abwickelbares und im Dachbereich lösbar festlegbares Rollo befindet. Dieses wird bei einer starken Zugbelastung lotrecht nach oben von den Lagerzapfen losgerissen und beaufschlagt dabei eine vom ersten Aufnahmeraum nach unten abstehende Sperrklappe, die dabei nach oben geschwenkt wird und hierbei das Rollo gegen die zugewandte Gehäusewandung presst, so dass die Rollowelle arretiert wird. Hierbei wird jedoch kinetische Energie nur in geringem Maße abgebaut.

Aufgabe der Erfindung ist es, ein Rollogehäuse der im Oberbegriff des Patentanspruchs 1 genannten Art derart an der Rückenlehne zu befestigen, dass bei einer Beaufschlagung des Rollogehäuses durch ein sich im Laderaum befindendes, loses Ladegut die kinetische Energie gezielt in die Befestigungseinrichtung eingeleitet wird.

Zur Lösung der Aufgabe sind die im Patentanspruch 1 dargelegten Merkmale vorgesehen.

Da die Befestigungseinrichtung des Rollogehäuses erfindungsgemäß so bemessen und ausgebildet ist, dass bei dessen Beaufschlagung das Rollo vorgespannt wird, wird hierbei kinetische Energie durch die definierte Verformung der Befestigungseinrichtung abgebaut. Dies hat den Vorteil, dass das Rollogehäuse in verhältnismäßig einfacher und kostengünstiger Weise an der Rückenlehne befestigt werden kann. Femer wird durch das Vorspannen des Rollos ein vorhandener Leerweg, der zum Einhängen des Rollos im Dachbereich und aus Toleranzgründen erforderlich ist, ausgeglichen (Merkmale des Patentanspruchs 1).

Zweckmäßigerweise stehen vom Rollogehäuse zwei, im Abstand voneinander liegende Halter ab, die in eine entsprechend ausgebildete Aufnahme an der Rückseite der Rückenlehne verrastend eingreifen, so dass das Rollogehäuse lösbar an der Rückenlehne befestigbar ist (Merkmale des Patentanspruchs 2).

Der Halter ist T-förmige und steht dabei radial vom Rollogehäuse im Bereich von dessen beiden Endabschnitten ab. Zur Aufnahme der T-förmigen Halter sind an der Rückseite der Rückenlehnen der Rücksitze T-förmige Aufnahmenuten ausgebildet, in die die Halter des Rollogehäuses in einfacher Weise rüttelfest einschiebbar sind.

Dabei haben die Halter des Rollogehäuses etwa eine Länge von 60 mm und sind dabei rasch und in einfacher Weise in die T-förmigen Aufnahmenuten einschiebbar. Durch diese Anordnung der T-förmigen Halter am Rollogehäuse kann dieses vorteilhafterweise auch bei etwa lotrecht verlaufenden Rückenlehnen in eine Aufnahme an diesen oder in eine fahrzeugaufbauseitige Aufnahme eingeschoben und dabei das Rollo etwa lotrecht oder auch etwa waagrecht abgewickelt werden (Merkmale des Patentanspruchs 3).

Gemäß den Merkmalen des Patentanspruchs 4 hat das Rollogehäuse eine etwa rechteckförmige Gestalt mit in seiner Einbaulage etwa lotrecht verlaufenden Breitseiten. Dies hat den Vorteil, dass bei einer Beaufschlagung des Rollogehäuses bei einer starken Verzögerung des Fahrzeugs und dabei nach vorne schleuderndem Ladegut dieses zuerst das Rollogehäuse beaufschlagt und damit in dieses die kinetische Energie einleitet. Erst daraufhin beaufschlagt das Ladegut unter Erzeugung einer Kippbewegung mit vorhandener Restenergie das Rollo, das hierbei nicht mehr beschädigt wird.

Schließlich ist am Rollogehäuse an der dem Laderaum zugewandten Breitseite seiner Auslassöffnung eine Leiste mit einer Vielzahl von abschnittsweise nebeneinander liegenden Rastnocken vorgesehen, die bei Beaufschlagung des Rollogehäuses durch das lose Ladegut in Öffnungen des Rollos eingreifen und dieses dadurch vorspannen (Merkmale des Patentanspruchs 5).

Ein Ausführungsbeispiel der Erfindung ist in der Zeichnung dargestellt und wird im folgenden erläutert. Es zeigt:
- Figur 1: eine Seitenansicht eines Kombiwagens mit nach vorne geschwenkten Rückenlehnen der Rücksitze mit Rollogehäuse und am Dachbereich eingehängtem Rollo,
- Figur 2: eine vergrößerte Einzelansicht des Endbereichs einer Rückenlehne mit Rollogehäuse.

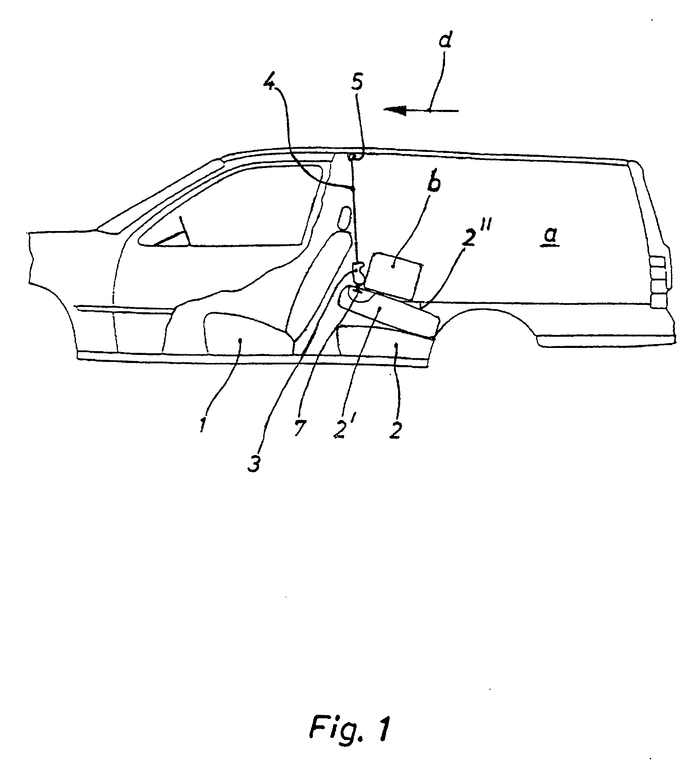

Der in Figur 1 dargestellte Kombiwagen hat zwei Vordersitze 1 und zwei Rücksitze 2, deren Rückenlehnen 2' um eine Querachse schwenkbar gelagert und dabei in einer etwa waagrecht nach vorne und unten geschwenkten Lage dargestellt sind, so daß der Laderaum a eine große Längserstreckung hat.

In der dargestellten, nach vorne geschwenkten Lage der Rückenlehnen 2' der beiden Rücksitze 2 ist am freien Randbereich der Rückseite 2" der Rückenlehnen 2' ein sich einstückig über die Fahrzeugbreite erstreckendes Rollogehäuse 3 lösbar befestigt, auf dessen Lagerwelle ein Rollo 4 aufwickelbar ist. Dabei wird das Rollo 4 in abgewinkeltem Zustand an zwei gegenüberliegenden, am Dachrahmen vorgesehenen Aufnahmeelementen 5 lösbar eingehängt. In dieser Lage des Rollos 4 wird ein Nachvomeschleudern (Pfeilrichtung d) eines sich unbefestigt im Laderaum a befindenden, schweren Ladeguts b, beispielsweise bei einem Frontalcrash des Kombiwagens, verhindert, da das Rollogehäuse 3 und das abgewinkelte Rollo 4 hierbei als eine Auffangeinrichtung dienen.

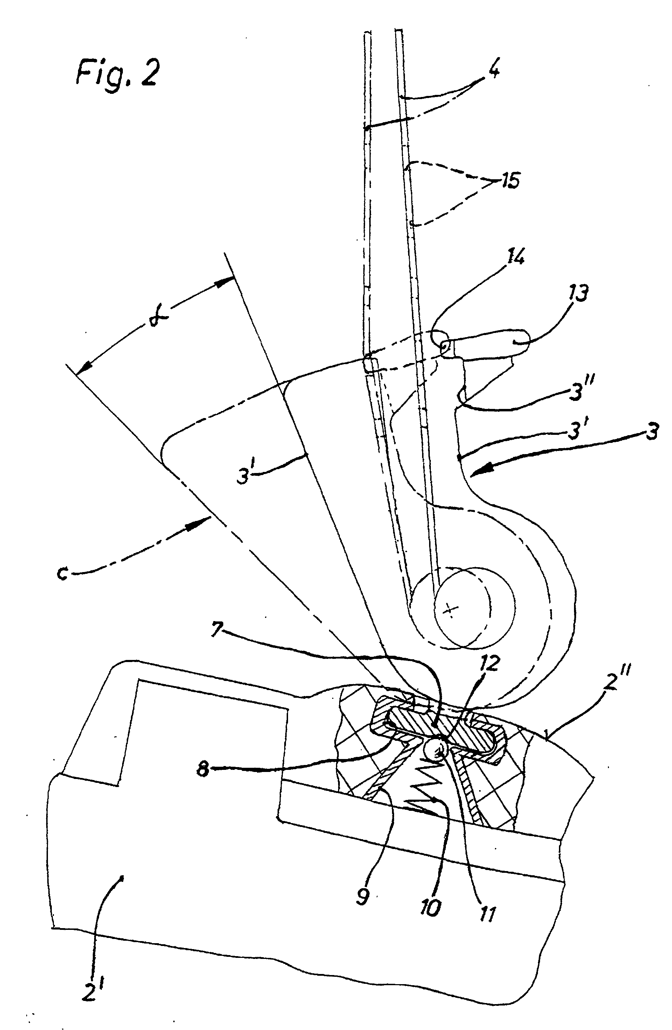

Zur lösbaren Befestigung des Rollogehäuses 3 an der Rückseite 2" der Rückenlehnen 2' der Rücksitze 2 stehen vom Außenumfang des Rollogehäuses 3 - wie Figur 2 zeigt - zwei T-förmig gestaltete Halter 7 radial ab, die sich im Bereich der Endabschnitte des Rollogehäuses 3 befinden. Dabei haben die längs diesem verlaufenden T-förmigen Halter 7 jeweils eine Länge von etwa 60 mm. Ferner ist an den Rückseiten 2" der beiden Rückenlehnen 2' jeweils eine T-förmige Aufnahmenut 8 ausgebildet, in die die T-förmigen Halter 7 des Rollogehäuses 3 einschiebbar sind, so daß dieses rüttelfest an den Rückenlehnen 2' der Rücksitze 2 festgelegt ist. Damit das Rollogehäuse 3 nach dem Einschieben in die T-förmigen Aufnahmenuten 8 der Rückenlehnen 2' die vorgesehene Einbaulage einnimmt und auch schubfest festgelegt ist, ist in den Rückenlehnen 2' jeweils eine Ausnehmung 9 vorgesehen, in der sich eine Druckfeder 10 befindet, welche in Einbaulage des Rollogehäuses 3 eine Kugel 11 in eine an der Unterseite des T-förmigen Halters 7 vorgesehene Vertiefung 12 preßt.

Wie in Figur 2 femer ersichtlich, hat das Rollogehäuse 3 eine rechteckförmige Gestalt, wobei in der dargestellten Einbaulage des Rollogehäuses 3 die Breitseiten 3' etwa lotrecht verlaufen. Durch diese Anordnung des Rollogehäuses 3 einerseits und durch eine entsprechende Bemessung und Ausbildung seiner beiden T-förmigen Halter 7 andererseits ist gewährleistet, daß beispielsweise bei einem Frontalcrash des Kombiwagens das sich unbefestigt in seinem Laderaum a befindende, schwere Ladegut b zunächst - wie Figur 1 zeigt - in Pfeilrichtung d gegen das Rollogehäuse 3 geschleudert wird, wobei sich dessen T-förmigen Halter 7 um einen Winkelbereich α begrenzt verbiegen und damit das Rollogehäuse 3 etwa die in Figur 2 mit strichpunktierten Linien dargestellte Winkellage c einnimmt. Dabei sind die T-förmigen Halter 7 derart bemessen, daß sich das Rollogehäuse 3 um einen Winkelbereich α von etwa 30 bis 50 ° gegenüber seiner Einbaulage (Ruhelage) zu den Rückseiten 2" der Rückenlehnen 2' hin verlagern kann. An der von den Rückseiten 2" der Rückenlehnen 2' abgewandten Breitseite 3' des Rollogehäuses 3 ist am Rand von dessen Auslaßöffnung 3" eine Formleiste 13 vorgesehen, an der eine Vielzahl abschnittsweise nebeneinander liegender Rastnocken 14 einstückig ausgebildet sind. Diese greifen bei der vorerwähnten winkelmäßigen Verlagerung des Rollogehäuses 3 (Winkel α) zu den Rückenlehnen 2' hin in Öffnungen 15 des Rollos 4 ein, so daß dieses durch Verlagerung gegenüber seiner Ruhelage vorgespannt wird, wie in Figur 2 mit strichpunktierten Linien dargestellt ist.

## Patentansprüche

1. Kraftfahrzeug mit mindestens einem zwischen Fahrgastraum und Laderaum (a ) anbringbaren Rollo (4), dessen Gehäuse (3) an der Rückenlehne (2") eines Rücksitzes (2) über mindestens eine Befestigungseinrichtung angebracht ist, wobei das Rollo (4) bei einer etwa waagrecht nach vorne, unten geschwenkten Lage der Rückenlehne (2") im Dachbereich eingehängt ist und dabei als Auffangeinrichtung von sich lose im Laderaum (a) befindendem Ladegut (b) dient, das bei einer starken Fahrzeugverzögerung die Auffangeinrichtung beaufschlagen kann, und
die Befestigungseinrichtung des Rollogehäuses (3) so bemessen und derart ausgebildet ist, dass sie bei einer Beaufschlagung des Rollogehäuses (3) durch den Aufprall eines Bohweren ladegutes begrenzt nachgibt, **dadurch gekennzeichnet, dass** das Rollogehäuse (3) derart verlagert wird, dass das Rollo (4) vorgespannt und hierbei die kinetische Energie durch gezielte Verformung der Befestigungseinrichtung größtenteils abgebaut wird.

2. Kraftfahrzeug nach Anspruch 1,
**dadurch gekennzeichnet, dass** von der Rückenlehne (2') oder vom Rollogehäuse (3) wenigstens zwei, im Abstand voneinander liegende Halter (7) abstehen, die jeweils in eine am anderen Teil vorgesehene Ausnehmung lösbar verrastend eingreifen.

3. Kraftfahrzeug nach Anspruch 1 oder 2,
**dadurch gekennzeichnet, dass**
- die Halter (7) T-förmig gestaltet sind und radial vom Rollogehäuse (3) im Bereich seiner Endabschnitte abstehen,
- an der Rückseite (2") der Rückenlehnen (2') der Rücksitze (2) jeweils eine etwa parallel zum freien Ende der Rückenlehnen (2') verlaufende T-förmige Aufnahmenut (8) ausgebildet ist, in welche die T-förmigen Halter (7) des Rollogehäuses (3) einschiebbar sind.

4. Kraftfahrzeug nach Anspruch 1,
**dadurch gekennzeichnet, dass** das Rollogehäuse (3) einen etwa rechteckförmigen Umriss aufweist, wobei in Einbaulage des Rollogehäuses (3) die Breitseiten (3') etwa lotrecht verlaufen.

5. Kraftfahrzeug nach Anspruch 4,
**dadurch gekennzeichnet, dass** an der dem Laderaum (a) zugewandten Breitseite (3') des Rollogehäuses (3) sowie im Bereich von dessen Auslassöffnung (3") abschnittsweise eine Vielzahl von dem Laderaum (a) abgewandte Rastnocken (14) vorgesehen sind, die bei einer Winkelverlagerung (Winkel α) des Rollogehäuses (3) durch den Aufprall eines schweren Ladegutes nach vorne zur Rückenlehne (2') hin in Öffnungen (15) des Rollos (4) eingreifen.

## Claims

1. A motor vehicle with at least one window blind (4) for attaching between the passenger space and the luggage space (a), the casing (3) of the blind being attached to the back rest (2") of a back seat (2) by at least one fastening device, wherein when the back rest (2") is in an approximately horizontal downward and forwardly pivoted position the blind (4) is suspended in the roof region and is used to hold any loose article of luggage (b) in the luggage space (a) capable of striking the receiving device if the vehicle decelerates sharply, and the device for fastening the blind casing (3) is dimensioned and constructed so that it yields to a limited extent if the blind casing (3) is subjected to the impact of a heavy article of luggage, **characterised in that** the blind casing (3) is so displaced that the blind (4) is prestressed and the kinetic energy is mostly dissipated by controlled deformation of the fastening device.

2. A vehicle according to claim 1,
**characterised in that** at least two spaced-apart holders (7) project from the back rest (2') or from the blind casing (3) and each engage and releasably lock in a recess in the other part.

3. A vehicle according to claim 1 or 2,
**characterised in that**
- the holders (7) are T-shaped and project radially from the blind casing (3) near the end portions thereof and
- a T-shaped receiving groove (8) approximately parallel to the free end of the seat rests (2') is formed on the back (2") of the seat rests (2') of the back seats (2), and the T-shaped holders (7) of the blind casing (3) are insertable into it.

4. A vehicle according to claim 1,
**characterised in that** the blind casing (3) has an approximately rectangular contour, and the wide sides (3') are approximately vertical when the blind casing (3) is in the inserted position.

5. A vehicle according to claim 4,
**characterised in that** a number of cams (14) are provided at places on the wide side (3') of the blind casing (3) facing the luggage space (a) and in the neighbourhood of the outlet opening (3") of the casing, and engage in openings (15) in the blind (4) when the blind casing (3) is moved through an angle (angle α) relative to the back rest (2') after being knocked forward by a heavy article of luggage.

## Revendications

1. Véhicule automobile comportant au moins un filet (4) de retenue à rouleau attachable entre le compartiment des passagers et le compartiment (a) des bagages, dont le boîtier (3) est fixé au dossier (2") d'un siège (2) arrière par au moins un dispositif de fixation, où le filet (4) de retenue à rouleau pour une position sensiblement horizontale, basculée vers l'avant, vers le bas du dossier (2") de siège, est accroché dans la zone de toit et sert alors de dispositif d'interception d'un chargement (b) figurant dans le compartiment (a) des bagages sans être fixé, qui, lors d'un fort ralentissement du véhicule peut heurter le dispositif d'interception, et le dispositif de fixation du boîtier (3) de filet de retenue à rouleau étant dimensionné et constitué de manière telle que, lors d'un choc contre le boîtier (3) de filet de retenue à rouleau, en raison de l'impact d'un chargement lourd, il cède de manière limitée,
**caractérisé en ce que**
le boîtier (3) de filet de retenue à rouleau est décalé de manière telle que le filet (4) de retenue à rouleau est précontraint et que, de ce fait, l'énergie cinétique est, en majeure partie, dissipée par une déformation ciblée du dispositif de fixation.

2. Véhicule automobile selon la revendication 1,
**caractérisé en ce que**
du dossier (2') de siège ou du boîtier (3) de filet de retenue à rouleau, au moins deux appuis (7) reposant à distance l'un de l'autre, s'écartent, qui chacun s'engagent en s'encliquetant de manière amovible dans un creux prévu dans l'autre pièce.

3. Véhicule automobile selon la revendication 1 ou 2,
**caractérisé en ce que**
- les appuis (7) sont en forme de T et s'écartent dans le sens radial du boîtier (3) de filet de retenue à rouleau dans la zone de ses sections d'extrémité,
- à chaque côté (2") arrière du dossier (2') d'un siège (2) arrière, une rainure (8) de réception en forme de T, s'étendant sensiblement parallèlement à l'extrémité libre du dossier (2') de siège, est formée, dans laquelle les appuis (7) en forme de T du boîtier (3) de filet de retenue à rouleau peuvent s'introduire en coulissant.

4. Véhicule automobile selon la revendication 1,
**caractérisé en ce que**
le boîtier (3) de filet de retenue à rouleau présente un contour sensiblement rectangulaire, où, en position de montage du boîtier (3) de filet de retenue à rouleau, les côtés (3') larges s'étendent sensiblement verticalement.

5. Véhicule automobile selon la revendication 4,
**caractérisé en ce que**
sur le côté (3') large dirigé vers le compartiment (a) des bagages du boîtier (3) de filet de retenue à rouleau ainsi que dans la zone de son ouverture (3") d'évacuation, par sections, une pluralité d'ergots (14) d'encliquetage détournés du compartiment (a) des bagages qui, lors d'un décalage angulaire (angle α) vers le dossier (2') de siège du boîtier (3) de filet de retenue à rouleau en raison de l'impact vers l'avant d'un chargement lourd, s'engagent dans les ouvertures (15) du filet (4) de retenue à rouleau.
